# EUROPEAN PATENT APPLICATION

(11) **EP 1 488 980 A2**
(43) Date of publication of application: **22.12.2004**
(21) Application number: 04253635.9
(22) Date of filing: 17.06.2004
(51) Int. Cl.: B62B 3/06, B62B 3/04

(54) **Pallet trolley**

(30) Priority: 17.06.2003 GB 0314016
(71) Applicant: ABF Grain Products Limited, London (GB)
(72) Inventor: Lawrence, Peter, Simmonley, Glosspo SK13 6PF (GB)
(74) Representative: Hedges, Martin Nicholas

(57) **Abstract**

A pallet trolley a C-shaped support frame member (1) formed by spaced apart longitudinally extending support arms (6, 7) joined together at one end by a first cross-member (8), and a C-shaped lifting frame member (2) formed by spaced apart longitudinally extending lifting arms (14, 15) joined together at one end by a second cross-member (16), said frames (1, 2) being arranged with the support arms (6, 7) extending substantially parallel to the lifting arms (14, 15). A number of struts (21) extend between the lifting frame and the support frame, each strut being pivotally attached at one end to one of the support arms and at the other end to one of the lift arms and being sized such that, when the strut is perpendicular to the lift and support arms, the lifting frame is spaced apart from the support frame. An actuating lever (3) is pivotally mounted on support frame member (1) and is operatively connected to the lifting frame member (2) at a point on the actuating lever (1) spaced apart from said support frame member (1) such that, upon pivotal movement of the lever (3) about said support frame member (1), the lifting arms (14, 15) are caused to move longitudinally relative to said first frame member (2), the struts (21) developing a camming action upon such longitudinal relative movement which causes the lifting frame to move in an arcuate path relative to the support frame, thereby elevating the lifting frame (2) above the support frame (1)

## Description

The present invention relates to trolleys for facilitating moving of stacks of trays such as pallets, plastic baskets or the like.

Many items of commerce are packets in trays to facilitate their movement as well as to protect the items from damage, the trays typically being transported in stacks of in order to make movement of the items as well as their storage more efficient. The weight of these stacks makes them difficult to lift, and movement is therefore effected by means of a trolley. For example, in one system known in the prior art, each stack is built on a trolley base which includes a brake to prevent unwanted movement. The trolley base further includes a towing hook which an operator engages with a towing handle before releasing the brake and dragging the stack to the required position. This system has the disadvantage, however, that a separate trolley is required for each stack, increasing costs. Furthermore, the trolleys can still be difficult to move, despite the wheels, and also difficult to steer. Finally, a stack can easily become de-stabilised during movement, leading to collapse which can cause damage to the goods as well as injury to the operator.

According to the present invention there is provided a pallet trolley comprising a C-shaped first frame member formed by spaced apart longitudinally extending support arms joined together at one end by a first cross-member; a C-shaped second frame member formed by longitudinally extending lifting arms joined together at one end by a second cross-member, said frames being arranged with the support arms substantially parallel to said lifting arms; an actuating lever pivotally mounted on said first frame member and operatively connected to the second frame member at a point on the actuating lever spaced apart from said first frame such that, upon pivotal movement of the lever about said first frame member, the lifting arms of said second frame member are caused to move longitudinally relative to said first frame member; and cam means which operates to vary the vertical position of the second frame relative to the first frame upon relative longitudinal movement therebetween.

More particularly, in the present invention, pivotal movement of the actuating lever causes, through the cam means, movement of the second frame member relative to the first frame member between a first collapsed position in which the second frame adopts a first vertical spacing from the first frame, and a second elevated position in which the second frame adopts a second vertical spacing from the first frame greater than the first vertical spacing.

A pallet trolley in accordance with the invention has the advantage that the trolley can easily be positioned beneath a stack of pallets and the lever actuated to move the second frame relative to the first and thereby lift the stack off of the ground for easy movement. A single trolley can hence be used to move a number of stacks around in turn. The mechanical advantage afforded by the actuating lever also reduces the force required by the operator to lift the stack, thereby making operation easy and less likely to cause injury.

The trolley preferably includes roller means, such as wheels, mounted on first frame member for facilitating moving of the trolley in both the loaded and unloaded states. The first and second frames are also arranged with their arms pointing in the same direction and hence with their open ends aligned. In use, then, the trolley is positioned under a stack by receiving the bottom pallet of the stack through the open ends of the first and second frames so that the arms extend on either side thereof with the arms of the second frame aligned with flanges formed along the sides of the pallet. Upon elevation of the second frame above the first frame, the arms of the second frame engage said flanges and hence lift the stack off of the ground.

In the preferred embodiment, the width of the second frame is substantially the same as the width of the first frame so that the second frame in collapsible onto the first frame with the arms of the second frame engaging the arms of the first frame. The second frame is then raised away from the first frame upon pivotal movement of the lever towards its lifting position. Stop means is preferably provided to limit the movement of the second frame relative to the first frame. Such stop means may take the form of a post mounted on the first frame which is engaged by the cross-member of the second frame when the second frame reaches its position of desired maximum vertical spacing from the first frame member. Alternatively, a guide bracket may be provided on the trolley adjacent the actuating lever, which bracket includes a stop to limit the pivotal movement of the lever relative to the bracket and hence to limit the movement of the second frame relative to the first frame. Locking means may also be provided which are operable to lock the second frame member in a radial position or limit the range of movement relative to the first frame member, thereby preventing accidental lowering of the trolley. In particular, a pair of guide brackets may be provided on the trolley on either side of the actuating lever, a plurality of aligned holes being provided in the guide brackets through which a pin may be inserted to limit the return movement of the lever.

In a particularly advantageous development, the trolley includes an upstanding stabilising post which engages the stack of pallets in order to provide lateral and longitudinal stability thereto and hence prevent the stack from tilting and collapsing during movement. This has the advantage of reducing the risk of injury to an operator caused by impact by a pallet, and also reducing the possibility of damage being caused to the goods being transported in the pallets. The stabilising post preferably includes a hook, such as a latching hook, on an upper end which latches onto the side of a pallet located towards the top of the stack so as firmly to anchor said pallet to the stabilising post. An actuating cable may be connected to the hook to enable its remote operation by a user, for example by use of a hook release lever provided on the end of the actuating lever, or by use of a foot pedal. The position of the hook on the post may also be varied by provision of suitable releasable locking means, so as to enable the trolley to be configured for use with stacks of a variety of heights. The stabilising post is preferably mounted on the second frame member, in particular on the longitudinal centre line of the trolley on the cross-member of the second frame member. Additional stabilising posts may also be provided to further improve the stability of a stack during transport.

Preferably, the arms of each frame member are formed of a plurality of separate members which are in telescopic engagement with each other, locking means being provided to enable the telescoping members to be locked in a plurality of different positions so as to enable the length of the arms of the frame members to be varied to accommodate different load sizes. Furthermore, the arms are preferably connected to their associated cross-member at a number of different positions so as to enable the separation between the arms to be varied to accommodate pallets of differing widths. In particular, the arms may be slidably mounted on the cross-members, with suitable clamping means being provided to enable them to be locked in a number of different positions.

In the preferred embodiment of the invention, the cam means comprises a plurality of struts which extend between the arms of the first and second frames on either side of the trolley, the struts extending parallel to each other and each strut being pivotally attached to one arm of the first frame at one end and pivotally attached to a corresponding arm of the second frame at the other end. In this way, longitudinal movement of the second frame relative to the first frame causes the struts to pivot about their ends attached to the first frame, which, in turn, causes the second frame to move in an arcuate path, lifting it away from the first frame member. The length of the struts are furthermore set so that when they extend perpendicularly between the between the first and second frame members, the second frame is vertically spaced from the first frame by the amount required to lift the pallet stack clear of the ground for movement. The length of the struts may also be adjustable although this may also necessitate adjustment of the length of the connection between the towing lever and the second frame. The stop means then operates to prevent the struts from pivoting over-centre. In one embodiment, each end of each strut engages in a recess formed on the longitudinal axis of the arm with which it is associated, so that, in the collapsed position, the struts are enclosed within the recesses between the arms and hence out of sight. Alternatively, the struts may be attached to the outer or inner sides of the arms.

The actuating lever preferably includes locking means for locking it in a first pivotal position relative to the first frame member corresponding to the collapsed or lowered position of the second frame member relative to the first frame member. This locking means preferable takes the form of a rod which extends from the bottom of the actuating lever and engages in a recess in the first frame member. Spring means may be provided to bias the rod into an extending position for automatic engagement in said recess, and release means such as a release lever provided on the actuating lever for retracting the end of the rod out of the recess against the action of the spring means and hence freeing the actuating lever to pivot about the first frame member. Alternatively, a release pedal may be provided at the base of the actuating lever which may be operated by the user's foot to release the actuating lever for pivotal movement. Mounting of the actuating lever on the first frame member and connection of the actuating lever to the second frame member can be achieved by provision of suitable brackets on the cross members of the first and second frame members, and by provision of linkage means extending between the actuating lever and the cross-member of the second frame.

In an alternative embodiment, hydraulic or pneumatic lifting means may be provided between the fist and second frame members, which are operated by movement of the actuating lever to raise the second frame member above the first so as to lift a stack of pallets or the like.

In order that the invention may be well understood, there will now be described some embodiments thereof, given by way of example, reference being made to the accompanying drawings, in which:
Figure 1 a is a side view of a trolley of the invention in its disengaged position;
Figure 1b is a side view of the trolley of Figure 1a in its engaged position;
Figure 1c is a side view of the trolley arranged beneath a stack in its disengaged position;
Figure 1d is a side view of the trolley arranged beneath a stack in its engaged position;
Figure 2a is a side view of the towing lever of the trolley of Figure 1;

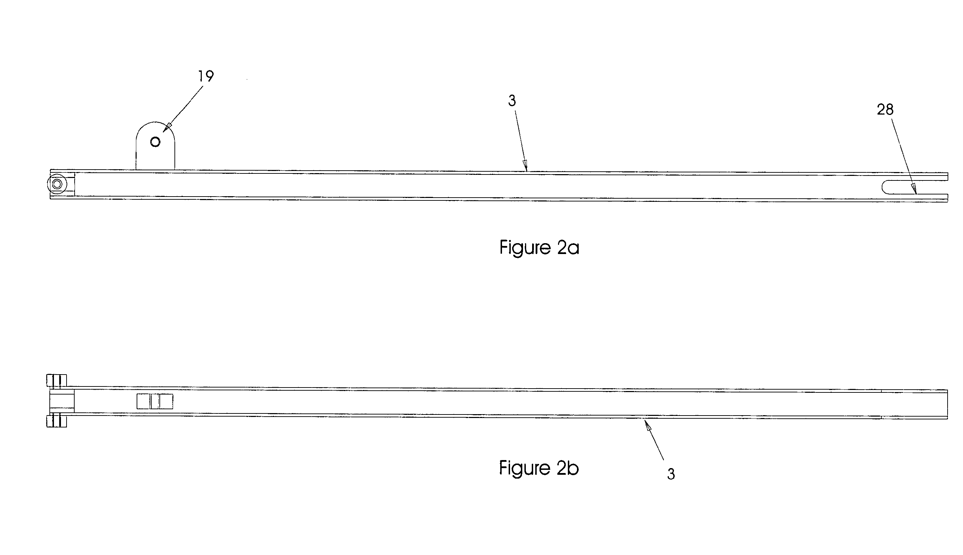

Figure 2b is a front view of the towing lever of Figure2a;
Figure 3 is a top view of the base frame of the trolley of Figure 1;
Figure 4 is a top view of the lifting frame of the trolley of Figure 1; and
Figure 5 is an enlarged side view of a handle carried on the end of the towing lever;
Figures 6a to 6c are side and end views of a second embodiment of the trolley of the invention in the disengaged and engaged positions respectively; and
Figure 7 is a side view of a third embodiment of the trolley of the invention.

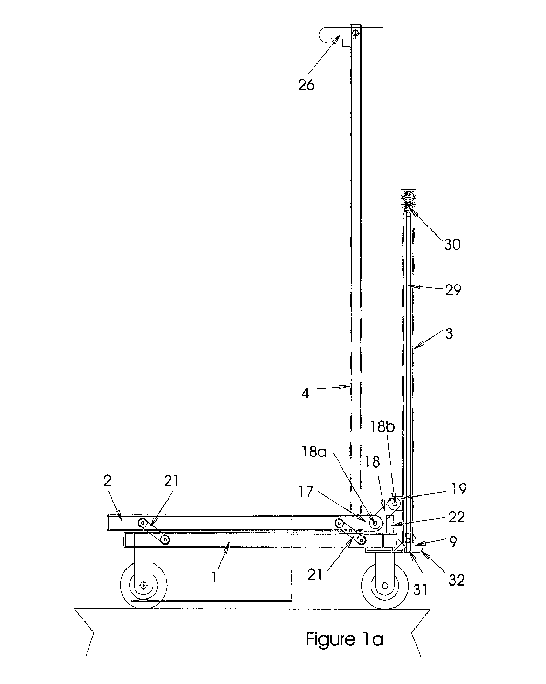

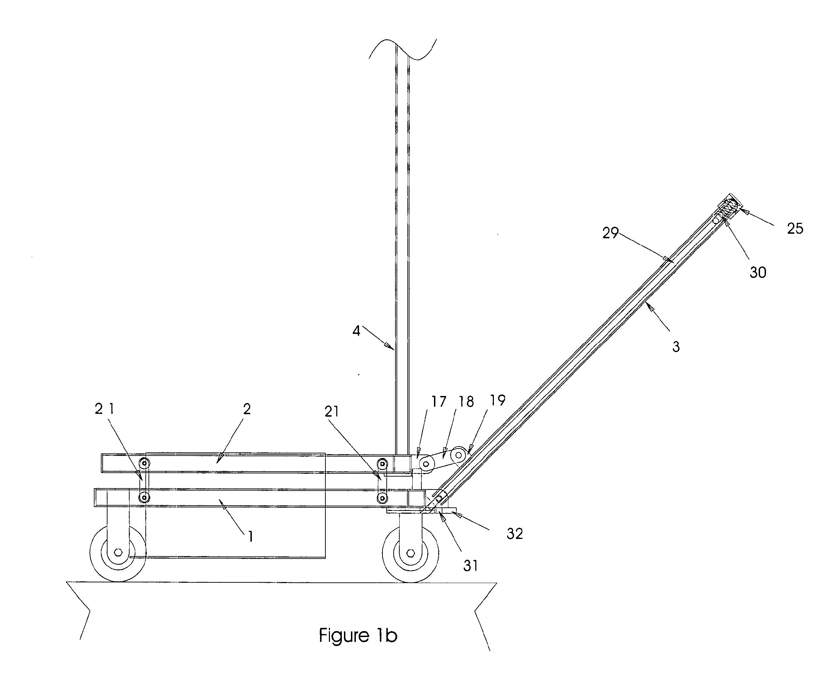

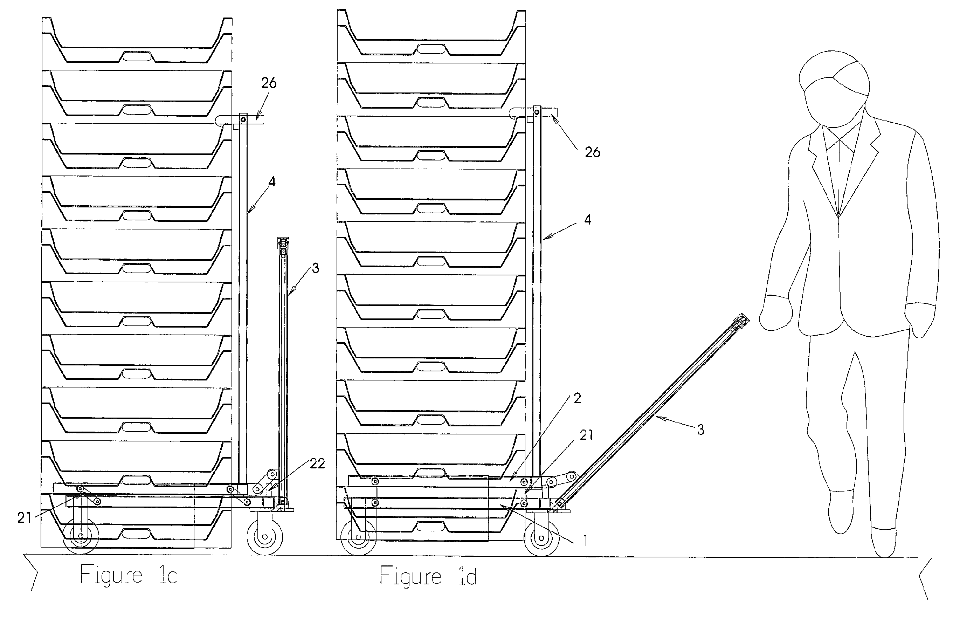

Referring first to Figure 1, there is shown a trolley comprising a base frame 1, a lifting frame 2, a towing lever 3 and a stabilising post 4. The base frame 1 is formed by laterally spaced apart longitudinal arms 6, 7 which extend parallel to each other and which are rigidly attached to each other by a cross-member 8 extending laterally across one end of the frame so as to form a C-shaped member.

The cross-member 8 has a bracket 9 attached thereto midway between the two arms 6, 7 in which the bottom of the towing lever 3 is connected for pivotally attaching the towing lever to the base frame 1. Wheels 10 are also mounted on each end of the arms 6, 7 of the base frame 1 for enabling rolling movement of the trolley.

The lifting frame is similarly formed to the base frame, having laterally spaced apart lifting arms 14, 15 which extend parallel to each other and which are rigidly joined together by a loading transmitting member 16 which extends perpendicularly between one pair of ends of the lifting arms 14, 15. The load transmitting member 16 also has a bracket 17 attached to it midway between the two hiring arms 14, 15 to which is attached one end 18a of a linkage arm 18. The other end 18b of the linkage arm 18 is attached to a bracket 19 attached to the towing lever 3 at a point proximate to but spaced apart longitudinally from the bottom of the towing lever such that, upon pivotal movement of the towing lever 3 about the bracket 9 on the base frame 1, the bracket 19 moves relative to the base frame 1, and, through the linkage 18, causes the lifting frame 2 also to move relative to the base frame 1.

The lifting frame 2 is positioned to overlie the base frame 1 as shown in Figures 1a to 1d and is connected to the base frame by means of struts 21, a first pair of struts 21 extending between the lifting arm 14 and the underlying base frame arm 6 on one side of the trolley, and a second pair of struts 21 extending between the lifting arm 15 and the underlying base frame arm 7 on the other side of the trolley. Each strut 21 is rotatably connected to its associated lifting arm 14, 15 at one end and its associated base frame arm 6, 7 at the other end, and all the struts 21 are oriented parallel to each other so as to form a parallelogram linkage arrangement, the struts 21 constraining the lifting frame 2 to pivotal movement relative to the base frame 1 about the mounting points of the struts 21 on the base frame 1.

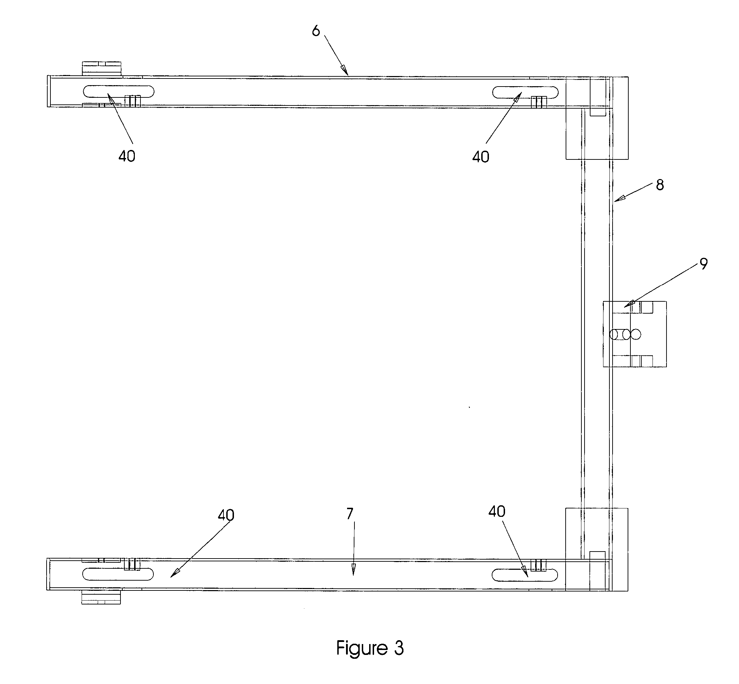

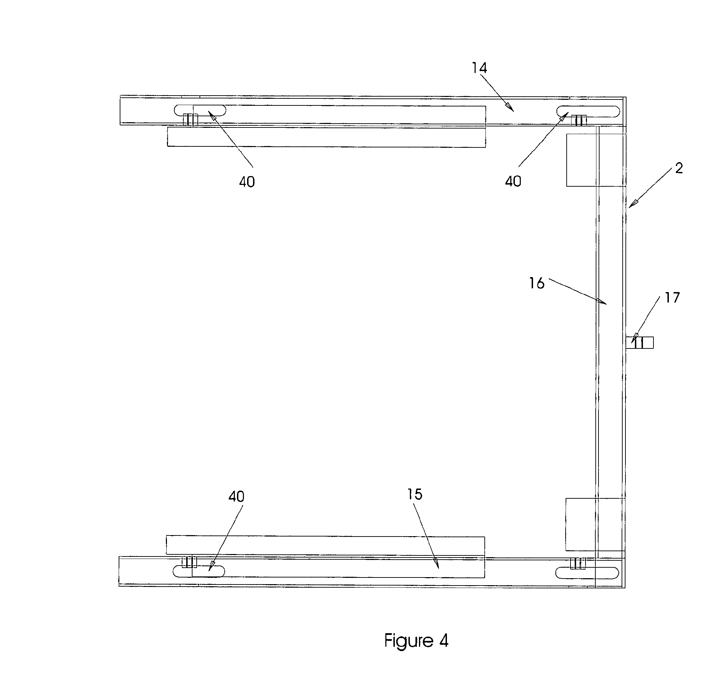

As shown in Figures 3 and 4, the arms 6, 7, 14, 15 of the base frame 1 and the lifting frame 2 include recesses 40 on their centre lines which extend along the longitudinal axis of each arm 6, 7, 14, 15. The ends of the struts 21 are pivotally mounted in the recesses 40 so as to be moveable between inclined and upright positions, and the recesses 40 are large enough so that each strut 21 is fully enclosed between in the recesses in which its ends are mounted when in its inclined position, shown in Figure 1a, and the struts are thereby enclosed within the arms.

Upon pivotal movement, then, of the towing lever 3 about the base frame bracket 9 from its upright position shown in Figure 1a to its inclined position shown in Figure 1b, the force transmitted through the linkage 18 develops a moment about the lower mounting points of the struts 21 causing the lifting frame to pivot about said lower mounting points from its collapsed position in which its engages against the base frame 1 and is longitudinally offset therefrom as shown in Figure 1a to its erect position shown in Figure 1b in which the lifting frame 2 is longitudinally aligned with and held vertically spaced apart from the base frame 1 by the struts 21. A stop post 22 extends vertically from the cross-member 8 of the base frame 1 which is engaged by the load transmitting member 16 of the lifting frame 2 when positioned above the base frame 1 with the struts 21 extending vertically therebetween so as to limit the movement of the mechanism and in particular to prevent over-centre movement of the lifting frame 2.

The separation of the arms of the base frame 1 and also of the lifting frame 2 is chosen such that the trolley can be positioned under a pallet such as a bread basket with the arms positioned under lifting flanges formed along either side of the pallet. The height of the trolley and the length of the struts 21 is furthermore set so that, with the towing lever 3 in its upright position and the lifting frame 2 collapsed onto the base frame 1, as shown in Figures 1a and 1c, the lifting frame 2 is low enough for the trolley to be rolled under a pallet, with the arms positioned under the lifting flanges, without actually engaging said flanges, whilst with the towing lever in its inclined position and the lifting frame 2 moved into its erect position as shown in Figures 1b and 1d, the lifting frame 2 is vertically separated from the base frame 1 by a distance sufficient for the arms 14, 15 of the lifting frame 2 to engage and raise the lifting flanges of the pallet, lifting the bottom of the pallet off of the ground and thereby enabling the trolley to be rolled with the pallet carried on the lifting frame 2.

The stack stabilising post 4 is mounted on and extends vertically from the centre of the load-transmitting member 16 and includes a hook 26 on its upper end. Upon positioning of the trolley beneath a stack of pallets, the hook 26 engages with and locks onto a side of one of the pallets towards the top of the stack, thereby firmly attached the stack to the post 4 and thereby ensuring that the stack does not tilt or fall over laterally or longitudinally during movement. In the illustrated embodiment, the hook is freely pivotally attached to the post 4 and have a curved or inclined leading edge so that upon positioning of the trolley beneath the stack, a camming action is developed between the hook and the side of the pallet at the appropriate height which cause the hook 26 to ride up over the edge of the pallet and to latch down on the other side. The hook is then manually released by the operator as the trolley is removed following movement of the stack. In a variant of the invention not illustrated, the hook is mounted on the post so as to be movable there along and lockable in a number of different positions. In this way, the hook 26 can be positioned to suit stacks of varying heights.

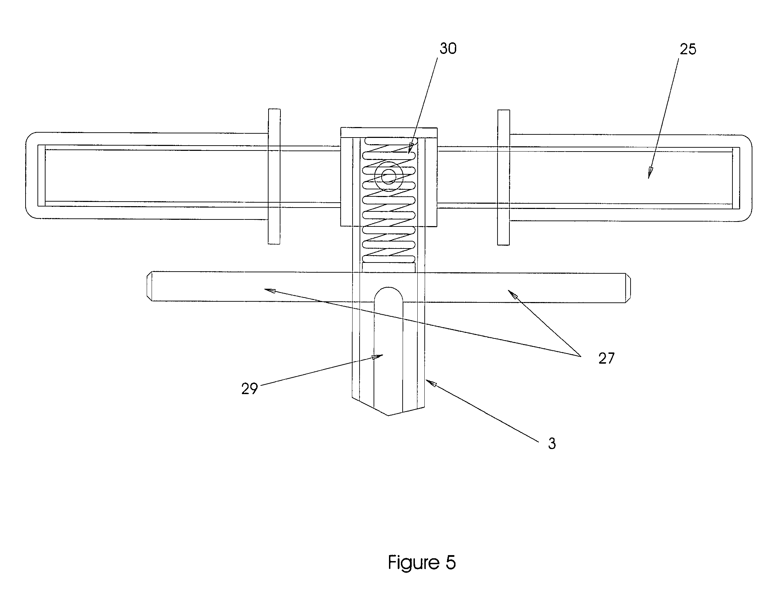

Figure 5 shows an enlarged view of a handle 25 which is provided on the upper end of the stabilising post 4 for facilitating pulling of the trolley by an operator. Release levers 27 extend laterally through longitudinal slots 28 formed in the towing lever 3 next to the handle 25 and connect to a locking rod 29 which extends the length of the lever 3. A spring 30 is positioned in the lever 3 above the rod 29 and biases the rod 29 away from the handle 25 into a position in which an end of the rod 29 protrudes from the bottom of the lever 3 and, in the upright position of the lever 3, engages in an opening 31 formed in a locking plate 32 attached to the base frame 1 so as to lock the lever 3 against pivotal movement. In order, then, to pivot the lever 3 into its inclined position for towing of the trolley, the releaser levers 27 are moved towards the handle 25 along the slots 28, moving the rod 29, to which they are attached, upwards within the towing lever 3 against the loading of the biasing spring 30. The lower end of the rod 29 is thereby retracted out of the engagement from the opening 31 in the locking plate 32 and the towing lever 3 is thereby freed for pivotal movement about its mounting bracket 9. Upon returning the towing lever 3 to its upright position, the engagement of the lower end of the rod 29 with the surface of the locking plate 32 will develop a camming action which will cause the rod 29 automatically to be pressed towards the handle 25 against the action of the spring 30 until the handle reaches the upright position and the rod 29 is again aligned with the opening 31 in the locking plate 32, at which time the lower end of the rod 29 will re-engage in the opening, relocking the towing lever in the upright position.

Instead of mounting the struts in recesses or slots formed in the arms, the struts may instead be pivotally attached to the outer or inner side of each arm, although this has the drawback that the struts will be exposed in both the upstanding and collapsed positions of the frames, increasing the possibility of their being damaged.

In an alternative embodiment of the invention not illustrated, the struts 21 are replaced by ramped projections formed on the upper surface of each arm 6, 7 of the base frame 1. The arms 14, 15 of the lifting frame 2 then include apertures aligned with the projections so that, in the collapsed position of the trolley, the projections engage in the apertures and the lifting frame rests on the base frame. Upon movement of the towing lever, the lifting frame is again pulled longitudinally relative to the base frame, and the edge of each aperture engages with and rides up the ramp surface formed on each proj ection, causing the lifting frame to lift upwards away from the base frame and the trolley to adopt its erect position.

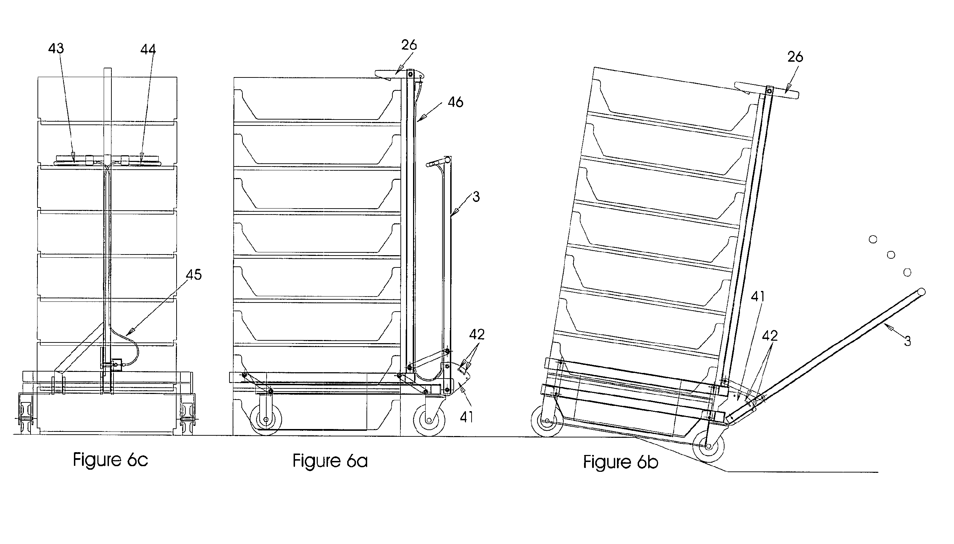

Referring now to Figures 6a to 6c, there are shown side and rear views of a modified version of the trolley of the invention in which a guide bracket is provided for the towing lever 3 in the form of a pair of guide plates 41 positioned on either side of the lever 3, so that the lever 3 slides therebetween. The guide plates 41 have a plurality of aligned holes 42 through which a pin (not shown) may be inserted so as to provide a stop in the path of pivotal movement of the lever 3 between the disengaged and engaged positions shown in Figures 6a and 6b respectively. In this way, a pin can be engaged through the appropriate pair of aligned holes once the towing lever 3 has been pivoted into its lifting position so as to provide a stop against return movement of the lever, thereby prevent erroneous lowering of the trolley. The pin may be inserted from one side of the trolley either in front of the arm to prevent its return movement or through the arm to prevent pivotal movement in either direction.

In a particularly advantageous development the pin is fixed within the towing handle and has ends which are engageable into the holes 42 under the action of a biasing spring, and are retractable into the towing lever, against the biasing action of the spring, to allow pivotal movement of the towing arm. Furthermore, a pin can permanently be fixed between the plates so as to provide a stop which limits the maximum pivotal movement of the lever 3, thereby ensuring that a user does not accidentally move the lifting bracket to an over-centre position which might increase the mechanical stresses on the mechanism.

The towing lever also has a pair of levers 43, 44 provided on its upper end for operation by the hands of the user. A first of these levers 43 is connected by a conventional push/pull cable to the locking pin for the towing lever 3 so as to enable the user to release the towing lever for pivotal movement remotely. For example, the cable may operate to retract the locking pin to enable the pivotal movement of the towing lever. The second lever 44 is similarly connected by a conventional push/pull cable to the stabilising hook 26, again enabling the user to remotely operate the hook in order to disengage it from the pallets when removing the trolley. In an alternative embodiment, not illustrated, these levers 43, 44 may be replaced by a pair of foot operated pedals which, again, operate conventional push/pull cables.

In a further development of the invention not illustrated, the arms of each of the base frame and the lifting frame are formed by two separate sections which engage one into the other in a telescoping fashion so as to enable the length of the arms to be adjusted to suit pallets of different sizes. The arms are further more slidably mounted on their associated cross-member so as to enable their separation to be varied to accommodate pallets of differing widths, suitable locking means being provided to retain the arms at their desired separation.

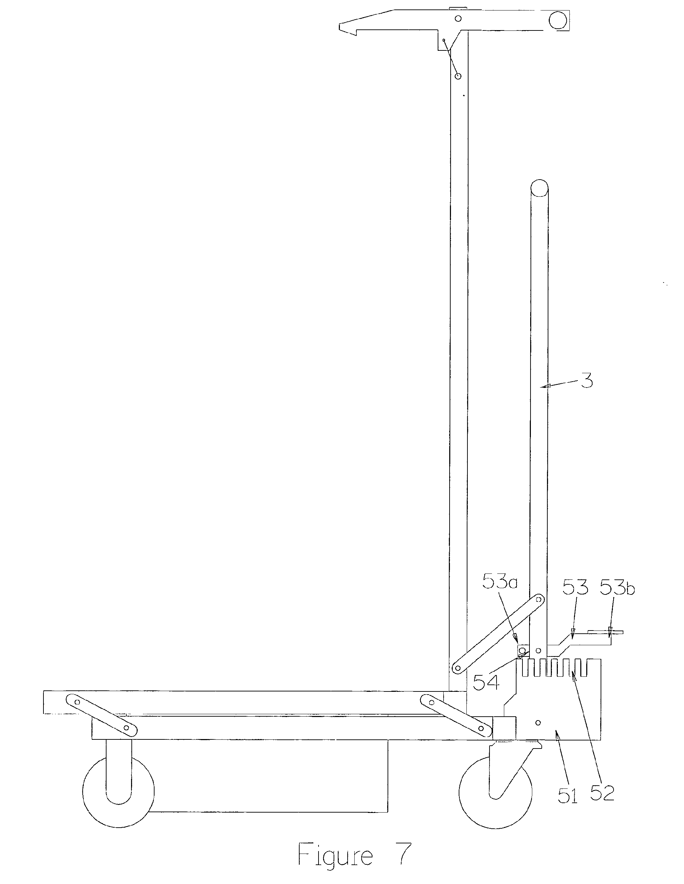

In a further embodiment illustrated in Figure 7, a guide bracket 51 is again provided for the lever 3, either on one or both sides of a lever, but in this case there are a number of spaced apart, substantially vertically extending slots 52 provided which extend from the upper edge of the or each bracket. A locking pedal 53 is pivotally attached to the lever 3, on one end 53a of which is a locking pin 54 that is engageable within said slots 52 to restrain the lever 3 against pivotal movement, the plurality of slots 52 providing a number of different locking position. The other end 53b of the pedal 53 may then be pressed by the user to lift the pin from within the slot so as to enable adjustment of the position of the lever. In all other respects, the trolley of this embodiment is the same as those previously described.

## Claims

1. A pallet trolley comprising a first C-shaped frame member (1) formed by spaced apart longitudinally extending support arms (6, 7) joined together at one end by a first cross-member (8); a second C-shaped frame member (2) formed by spaced apart longitudinally extending lifting arms (14, 15) joined together at one end by a second cross-member (16), said frames (1, 2) being arranged with the support arms (6, 7) extending substantially parallel to the lifting arms (14, 15); an actuating lever (3) pivotally mounted on said first frame member (1) and operatively connected to the second frame member (2) at a point on the actuating lever (1) spaced apart from said first frame member (1) such that, upon pivotal movement of the lever (3) about said first frame member (1), the lifting arms (14, 15) are caused to move longitudinally relative to said first frame member (2), and cam means (21) associated with said lifting arms (14, 15) to vary the vertical position of the second frame (2) relative to the first frame (1) upon relative longitudinal movement therebetween.

2. A pallet trolley according to claim 1, wherein said second frame (2) is moveable relative to said first frame (1) between a collapsed position in which said second frame (2) adopts a first vertical spacing from said first frame, and a second elevated position in which the second frame (2) adopts a second vertical spacing from the first frame (1) greater than the first vertical spacing.

3. A pallet trolley according to claim 2, wherein in said collapsed position, said second frame member (2) engages against the first frame member (1).

4. A pallet trolley according to claim 2 or claim 3, wherein in said collapsed position, said first and second cross members (8, 16) are longitudinally offset from each other, and in said elevated position, said cross member are substantially longitudinally aligned but vertically spaced apart from each other.

5. A pallet trolley according to any of the preceding claims, further including a linkage member (18) attached at one end (18b) to the actuating lever (3) at a point spaced longitudinally along the length of the actuating lever (3) from the first frame member (1), and attached at the other end (18b) to the second frame member (2).

6. A pallet trolley according to claim 5, wherein said other end of said linkage member (18) is pivotally attached to the cross-member (16) of the second frame member.

7. A pallet trolley according to any of the preceding claims, further including a stabilising post (4) mounted on and upstanding from the cross-member (16) of the second frame assembly (2), a hook (26) being provided on the end of the post which, in use, engages with a stack of pallets for stability during transport.

8. A pallet trolley according to claim 7, further including release means, preferably a release handle (44) or a release pedal, operable to lift the hook (26) so as, in use, to release the hook (44) from the stack of pallets.

9. A pallet trolley according to any of the preceding claims, further including locking means (29; 41, 42) associated with the actuating lever and operable to restrict the pivotal movement of the actuating lever (3), in particular operable to prevent said lever from pivotal movement.

10. A pallet trolley according to claim 9, wherein said locking means (29;41, 42) is connected to a lock release pedal or lock release handle operable by a user to disengage the locking means and hence enable pivotal movement of the actuating lever (3).

11. A pallet trolley according to any of the preceding claims, wherein said cam means (21) extend between said first and second frame members (1, 2).

12. A pallet trolley according to claim 11, wherein said cam means comprises a plurality of struts (21) which extend between the support arms (6, 7) and the lifting arms (14, 15), each strut (21) being pivotally attached at one end to the one of the support arms and at the other end to one of the lifting arms, such that upon longitudinal movement of the second frame relative to the first frame, said struts constrain the arms to move in an arcuate path, thereby lining said second frame (2) above said first frame (1).

13. A pallet trolley according to claim 12, wherein said plurality of struts extend substantially parallel to each other.

14. A pallet trolley according to claim 12 or claim 13, wherein the struts (21) are fastened to a sides of the lifting and support arms.

15. A pallet trolley according to claim 12 or claim 13, wherein said one end of each strut (21) is pivotally mounted in a recess formed in the associated support arm (6, 7) and the other end of each strut is pivotally mounted in as recess formed in the associated lifting arm (14, 15).

16. A pallet trolley according to any of claims 12 to 15, further including stop means which limits the longitudinal movement of the second frame member (2) relative to the first frame member (1).

17. Any of the pallet trolleys substantially as herein described with reference to the accompanying drawings.
